(19) Europäisches Patentamt
European Patent Office
Office européen des brevets

(11) Veröffentlichungsnummer: **0 027 193**
**B1**

(12) # EUROPÄISCHE PATENTSCHRIFT

(45) Veröffentlichungstag der Patentschrift: **15.12.82**

(51) Int. Cl.³: **C 01 B 7/01**, C 01 D 7/16

(21) Anmeldenummer: **80105857.9**

(22) Anmeldetag: **27.09.80**

(54) **Verfahren zur Herstellung von Natriumhydrogencarbonat und Chlorwasserstoff.**

(30) Priorität: **06.10.79 DE 2940614**
**19.08.80 DE 3031252**

(43) Veröffentlichungstag der Anmeldung: **22.04.81 (Patentblatt 81/16)**

(45) Bekanntmachung des Hinweises auf die Patenterteilung: **15.12.82 Patentblatt 82/50**

(84) Benannte Vertragsstaaten: **AT BE CH FR GB IT LI LU NL SE**

(56) Entgegenhaltungen:
**DE A 2 633 640**
**FR A 1 045 657**
**FR A 1 147 897**
**FR A 1 300 394**
**GB A 1 082 436**
**CHEMICAL ABSTRACTS, Band 83, Nr. 26, 29. Dezember 1975, Seite 117, Zusammenfassung Nr. 208079d, Columbus, Ohio, US, R. BLUMBERG et al.: « Interesting aspects in the development of a novel solvent extraction process for producing sodium bicarbonate »**

(73) Patentinhaber: **CHEMISCHE WERKE HÜLS AG**
**Postfach 1320**
**D-4370 Marl 1 (DE)**

(72) Erfinder: **Coenen, Alfred, Dr.**
**Altes Forsthaus**
**D-5471 Maria Laach (DE)**
Erfinder: **Kosswig, Kurt, Dr.**
**Hoechster Strasse 10**
**D-4370 Marl (DE)**
Erfinder: **von Praun, Ferdinand, Dr.**
**Am Schmöningsberg 8**
**D-4358 Haltern 6 (DE)**
Erfinder: **Regner, Hans, Dr.**
**Griesheimer Strasse 7**
**D-4370 Marl (DE)**

**EP 0 027 193 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung von Natriumhydrogencarbonat und Chlorwasserstoff

Ein Großteil der Weltsodaerzeugung erfolgt durch Calcinieren von Natriumhydrogencarbonat, das beim Ammoniaksoda-Verfahren als Zwischenprodukt nach der Gleichung

$$NaCl + CO_2 + H_2O + NH_3 \longrightarrow NaHCO_3 + NH_4Cl$$

neben Ammoniumchlorid anfällt. Aus der letztgenannten Verbindung wird das Ammoniak im allgemeinen durch Behandlung mit gebranntem Kalk zurückgewonnen. Hierbei fallen dann große Mengen von Calciumchlorid an, die gemeinsam mit dem nicht umgesetzten Natriumchlorid als Ablauge in die Vorfluter gegeben werden. Der Nachteil des Ammoniaksoda-Verfahrens besteht somit im wesentlichen darin, daß das gesamte Chlor des umgesetzten Natriumchlorids in Form des wertlosen Calciumchlorids ebenso wie das unumgesetzte Natriumchlorid verlorengeht.

Ähnlich wie beim Ammoniaksoda-Verfahren geht auch bei dem Verfahren der GB-A-1 082 436, nach dem u. a. Alkalicarbonate aus Alkalichloriden und Kohlensäure in Gegenwart eines in einem organischen Lösemittel gelösten stark basischen Amins hergestellt werden können, das eingesetzte Chlor verloren. Aus dem jeweils gebildeten Aminhydrochlorid wird nämlich nur das Amin durch eine Behandlung der organischen Phase mit einem alkalisch wirkenden Reagenz zwecks Rückführung in den Prozeß gewonnen.

Aus der IL-A-33 552 ist es bekannt, Natriumhydrogencarbonat und Chlorwasserstoff in Abänderung des Ammoniaksoda-Verfahrens dadurch herzustellen, daß man zunächst eine heterogene Mischung aus einem in einem polaren organischen Lösemittel gelösten Amin und einer Natriumchloridsole mit Kohlendioxid begast. Aus der wäßrigen Phase fällt das Natriumhydrogencarbonat aus, das entstehende Aminhydrochlorid bleibt in der organischen Phase gelöst und wird abgetrennt. Das Amin wird sodann aus seinem Hydrochlorid durch Behandeln mit wäßrigem Magnesium-hydroxid regeneriert, das erhaltene wäßrige Magnesium-chlorid bei Temperaturen bis ca. 500 °C unter Bildung von Magnesiumoxid, Magnesiumoxichlorid und Chlorwasserstoff zerlegt. Der Chlorwasserstoff fällt hierbei allerdings verfahrensbedingt nicht ausschließlich wasserfrei an, so daß er nur einer begrenzten technischen Verwertung zugeführt werden kann. Ein weiterer Nachteil dieses Verfahrens sind die bei der Chlorwasserstoffgewinnung erforderlichen Temperaturen und die damit verbundene verstärkte Korrosionsgefahr sowie der Einsatz von Magnesiumsalzen als zusätzliche Hilfsstoffe.

Aufgabe der vorliegenden Erfindung war es daher, ein wirtschaftliches und umweltfreundliches Verfahren zur Herstellung von Natriumhydrogencarbonat und Chlorwasserstoff aus Natriumchlorid und Kohlensäure zu entwickeln, das es zudem gestattet, den Chlorwasserstoff unter milderen und technisch einfacheren Bedingungen als nach dem Verfahren der IL-A-33 552 und darüber hinaus gegebenenfalls in wasserfreier Form zu gewinnen.

Diese Aufgabe wurde durch die in den Ansprüchen beschriebenen Maßnahmen gelöst.

Man geht dabei in der ersten Verfahrensstufe, die im nachfolgenden auch als Carbonisierungsstufe bezeichnet wird, von einer Mischung aus, die im wesentlichen eine wäßrige Natriumchloridlösung, ein tertiäres Amin, ein polares organisches Lösemittel und gegebenenfalls ein unpolares Lösemittel enthält. Weitere Bestandteile können z.B. gewisse Mengen gelöstes und ungelöstes Natriumhydrogencarbonat, ungelöstes Natriumchlorid und aktive (die Zersetzung von tertiärem Amin bewirkende) sowie inaktive Abbauprodukte der Amine sein.

Als Amine werden einzeln oder im Gemisch solche verwendet, bei denen sich die Basizität so einstellen läßt, daß sie sowohl in der Carbonisierungsstufe Hydrochloride bilden, als auch in der Thermolysestufe mit ausreichender Geschwindigkeit möglichst vollständig Chlorwasserstoff abspalten, wobei zur Vermeidung von Aminzersetzung keine zu hohe Temperatur (> 300 °C) erforderlich sein darf. Es zeigte sich, daß diese Voraussetzungen im allgemeinen einmal von tertiären nicht aromatischen Aminen, die in der Summe der stickstoffgebundenen Liganden 14 bis 39 Kohlenstoffatome enthalten, wobei alle Seitenketten unverzweigt primär sein können, davon jedoch höchstens eine Methylgruppe vorhanden sein darf, oder wobei die unverzweigten primären Seitenketten ganz oder teilweise durch verzweigte primäre ersetzt sein können unter der Voraussetzung, daß die Verzweigungsstelle mindestens 3 Kohlenstoffatome vom zentralen Stickstoffatom entfernt liegt, oder wobei zwei der Seitenketten verzweigt primär mit der Verzweigung in 2-Stellung sein können und die dritte Seitenkette unverzweigt primär ist, oder wobei eine Seitenkette verzweigt primär mit der Verzweigung in 2-Stellung sein kann, während die anderen Seitenketten entweder beide unverzweigt primär oder nur eine unverzweigt primär und die andere unverzweigt sekundär oder alicyclisch sein können, oder wobei zwei der unverzweigt primären Seitenketten durch Cyclohexylgruppen ersetzt sein können, und zum anderen von Gemischen anderer tertiärer nicht aromatischer Amine mit 14 bis 39 Kohlenstoffatomen, in denen die oben definierten Amine gewichtsmäßig überwiegen, erfüllt werden.

Geeignete Amine sind beispielsweise Trihexylamin, Trioctylamin, Trilaurylamin, Tri-(3,5,5-trimethylhexyl)-amin, Tri-(3,5,5-trimethyloctyl)-amin, Tri-(3,5,5-trimethyldecyl)-amin, N-Octyl-di-(2-ethylhe-

xyl)-amin, N,N-Dioctyl-(2-ethylhexyl)-amin, N-Octyl-N-(4-Heptyl)-(2-ethylhexyl)-amin, N-Octyl-N-(4-heptyl)-cyclohexylamin, N-Octyl-N-(2-ethylhexyl)-cyclohexylamin, N-Octyl-dicyclohexylamin und N-Hexadecyldicyclohexylamin.

Weiterhin können als tertiäre Amine auch N-Alkyl-azacycloalkane mit insgesamt mindestens 14 Kohlenstoffatomen verwendet werden. Die allgemeine Formel für solche Amine lautet

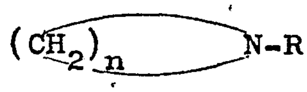

wobei n eine ganze Zahl von 4 bis 12 bedeutet, R für eine Alkylgruppe mit maximal 18 Kohlenstoffatomen steht und die Methylengruppen gegebenenfalls durch Alkylgruppen mit maximal 6 Kohlenstoffatomen in der Summe der Alkylgruppen substituiert sind.

Geeignete N-Alkyl-azacycloalkane sind beispielsweise N-Dodecyl-pyrrolidin, N-Hexadecyl-pyrrolidin, N-Octadecyl-pyrrolidin, N-Dodecyl-piperidin, N-Tetradecyl-piperidin, N-Hexadecyl-piperidin, N-Octadecylpiperidin, N-Octyl-azacycloheptan, N-Dodecyl-azacycloheptan, N-Octadecyl-azacycloheptan, N-Octyl-3,3,5-trimethyl-azacycloheptan, N-Octyl-3,5,5-trimethyl-azacycloheptan, N-Dodecyl-3,3,5-trimethyl-azacycloheptan, N-Dodecyl-3,5,5-trimethyl-azacycloheptan, N-octadecyl-3,3,5-trimethyl-azacycloheptan, N-Octadecyl-3,5,5-trimethyl-azacycloheptan, N-Octyl-azacyclononan, N-Dodecyl-azacyclononan, N-Octadecyl-azacyclononan, N-Hexyl-azacyclotridecan, N-Octyl-azacyclotridecan, N-Dodecyl-azacyclotridecan und N-Octadecyl-azacyclotridecan.

Es ist durchaus möglich, daß auch noch andere, nicht unter die Abgrenzungen fallende Amine in Kombination mit ausgewählten polaren organischen Lösemitteln beim erfindungsgemäßen Verfahren eingesetzt werden können. Z.B. gelingt die Carbonisierungsreaktion auch mit Tri-2-ethylhexylamin und Tricyclohexylamin unter anderem mit Phenol, 2,2,2-Trichlorethanol und 2,2,2-Trifluorethanol als polare organische Lösemittel. Die genannten Amine sind daher zwar als typisch, aber weder als optimal noch als begrenzend aufzufassen.

Die polaren organischen Lösemittel, die beim erfindungsgemäßen Verfahren allein oder im Gemisch eingesetzt werden, sind im allgemeinen durch ein Dipolmoment $\mu > 0$ (vgl. Landolt-Börnstein, Physikalisch-chemische Tabellen, 5. Auflage, 2. Ergänzungsband (1931), S. 74 bis 76) charakterisiert. Besonders bevorzugt sind polare organische Lösemittel mit einem Dipolmoment $\mu > 0,7$ debeyes. Daneben sollen sie die Fähigkeit besitzen, einen positiven Effekt auf die Aminhydrochloridbildung ausüben zu können. D. h., das polare organische Lösemittel muß in erster Linie so mit dem eingesetzten Amin und der gesamten Verfahrensführung abgestimmt sein, daß in der Carbonisierungsstufe das Aminhydrochlorid in genügend großer Ausbeute gebildet wird. Weiterhin ist das polare organische Lösemittel so zu wählen, daß es im weiteren Verlauf des Verfahrens, d.h. vor der Spaltung des Aminhydrochlorids auf möglichst einfache und wirtschaftliche Weise aus der(n) organischen Phase(n) entfernt werden kann.

Geeignete polare organische Verbindungen aus den verschiedensten Verbindungsklassen (Alkohole, Ester, Ether, Amide, Aldehyde, Ketone, substituierte Alkane, substituierte Aromaten u. a.) sind beispielsweise Methanol, Ethanol, Propanole, Butanole, Pentanole, 2-Ethylhexanol, Decanol, Cyclohexanol, 1,4-Bis-(hydroximethyl)-cyclohexan, 2,2,2-Trichlorethanol, 2,2,2-Trifluorethanol, Ethylenchlorhydrin, Propylenchlorhydrin, Furfurylalkohol, Glykole, wie z.B. Neopentylglykol, Ethylacetat, Diisobutylether, Dioxan, Tetrahydrofuran, Ethylenglykolmonobutylether, Diethylenglykolmonobutylether, N,N-Dimethylformamid, N,N-Dimethylacetamid, Aceton, Acetylaceton, Heptanon-(4), Cyclohexanon, 1,2-Dichlorethan, Nitromethan, Nitrobenzol, Benzonitril, Phenol, Kresole und Xylenole. Vor allem bei der Anwendung der bevorzugten Ausführungsformen des erfindungsgemäßen Verfahrens werden die aliphatischen Alkohole mit 3 oder 4 Kohlenstoffatomen, wie z.B. n-Propanol, Isopropanol, n-Butanol, Isobutanol, sek.-Butanol, tert.-Butanol, Buten-(1)-ol-(3) und Buten-(2)-ol-(1), cycloaliphatische Alkohole, wie z.B. Cyclopentanol und Cyclohexanol, 1,4-Bis-(hydroximethyl)-cyclohexan, Chloralkohole, wie z.B. Ethylenchlorhydrin und Propylenchlorhydrin, araliphatische Alkohole, wie z.B. Furfurylalkohol, Glykole, wie z.B. Ethylenglykol, Neopentylglykol, Ester, wie z.B. Propylencarbonat, Ether, wie z.B. Ethylenglykolmonomethylether, Ethylenglykolmonobutylether, Diethylenglykolmonobutylether, Dioxan und Tetrahydrofuran, Amide, wie z.B. Formamid, N,N-Dimethylacetamid und Hexamethylphosphorsäuretriamid, Aldehyde, wie z.B. Furfurol, Ketone, wie z.B. Aceton, Acetylaceton und Cyclohexanon, Phenol und Dimethylsulfoxid, als polare organische Lösemittel besonders bevorzugt.

Neben dem in der Carbonisierungsstufe verfahrenskritischen polaren organischen Lösemittel kann in der Carbonisierungsstufe des erfindungsgemäßen Verfahrens auch bereits ein solches unpolares Lösemittel oder Lösemittelgemisch eingesetzt werden, das im späteren Verlauf des Verfahrens auf jeden Fall vor der Aminhydrochloridspaltung zugegeben werden müßte. Geeignete unpolare Lösemittel aus der Gruppe der aromatischen, araliphatischen und aliphatischen Kohlenwasserstoffe, die im allgemeinen einen Siedepunkt über 140 °C, vorzugsweise über 170 °C, haben sollen und die unter den gegebenen Reaktionsbedingungen gegen Wasser, Chlorwasserstoff, Amine und Temperaturbelastung inert bzw.

weitgehend inert sind, sind beispielsweise Cymole, 1,2,3-Trimethylbenzol, 1,2,4-Trimethylbenzol, 1,2,4-Triethylbenzol, 1,3,5-Triethylbenzol, 1,2,3,4-Tetramethyl-benzol, 1,2,3,5-Tetramethylbenzol, 5-tert.-Butyl-m-xylol, 3-Phenylpentan, Dodecylbenzol, Decan, Undecan, Dodecan, Tetradecan, Decalin und Tetralin. Es können auch polare organische Lösemittel anstelle der unpolaren Lösemittel eingesetzt werden, wenn sie ebenfalls über 140 °C sieden und unter den Thermolysebedingungen gegen Wasser, Chlorwasserstoff, Amine und Temperaturbelastung inert bzw. weitgehend inert sind. Beispielhaft seien genannt : Diphenylether, Dinaphthylether, Phenylnaphthylether, o-, m-Dichlorbenzol. Der Begriff « unpolares Lösemittel » umfaßt demnach stets auch die Gruppe dieser speziellen polaren Lösemittel.

Zur Erzielung optimaler Umsätze in der Carbonisierungsstufe ist es zweckmäßig, die Natriumchloridlösung möglichst in gesättigter Form einzusetzen und während der Reaktion eine merkliche Abnahme der Konzentration zu verhindern. Das Mengenverhältnis (Verhältnis der Gewichtsmengen) der eingesetzten organischen Phase(n), bestehend aus Amin, polarem und unpolarem organischen Lösemittel zur wäßrigen Natriumchloridlösung wird auf der einen Seite beschränkt durch die Ausbeuteminderung infolge der Abnahme der Natriumchloridkonzentration durch die Reaktion und auf der anderen Seite durch den vorhandenen, wenn auch sehr geringen Austrag von Amin durch die Sole. Ersteres läßt sich z.B. durch Zugabe von festem Natriumchlorid zum Reaktionsgefäß vermeiden, während ein Aminverlust durch eine Kreisfahrweise der Sole über einen NaCl-Sättiger verhindert wird. Im allgemeinen liegt ein günstiges Mengenverhältnis der organischen Phase(n) zur Sole bei 6 : 1 bis 0,5 : 1, vorzugsweise 4 : 1 bis 1 : 1.

Das gewichtsmäßige Verhältnis zwischem dem polaren organischen Lösemittel bzw. der Mischung aus polarem und unpolarem organischen Lösemittel und dem Amin kann bei dem vorliegenden Verfahren in den Grenzen von 10 : 1 bis 0,2 : 1, vorzugsweise von 5 : 1 bis 0,5 : 1, variiert werden. Die Zusammensetzung einer gegenbenenfalls eingesetzten Lösemittelmischung, bestehend aus polarem und unpolarem organischen Lösemittel richtet sich einmal nach der erwünschten Höhe des Umsatzes in der Carbonisierungsstufe, zum anderen danach, wieviel unpolares Lösemittel am Ausgang der Thermolysestufe vorliegen soll. So kann es beispielsweise zweckmäßig sein, im Sumpf der Spaltkolonne eine gewisse Konzentration an unpolarem Lösemittel einzustellen, um eine zu hohe thermische Belastung des Amins zu vermeiden. Dasselbe Ziel erreicht man jedoch auch durch Hydrochloridspaltung im Vakuum, wobei keine nennenswerten Lösemittelmengen im Sumpf der Spaltkolonne zugegen sein müssen. Durch einige orientierende Versuche kann vom Fachmann leicht ermittelt werden, welche Zusammensetzung der Lösemittelmischung im speziellen Fall am besten geeignet ist. Es ist allerdings zweckmäßig, wenn das unpolare das polare organische Lösemittel mengenmäßig nicht übersteigt. Verwendet man beispielsweise Trioctylamin als Amin in einer Lösemittelmischung aus Isopropanol und Dodecan, so lassen sich gute Umsätze erzielen, wenn man in der genannten Reihenfolge ein gewichtsmäßiges Verhältnis von 1 : 1 : 1, besser noch von 1 : 1 : 0,5 oder 1 : 2 : 0,5, einstellt.

Bei der Durchführung des erfindungsgemäßen Verfahrens geht man im allgemeinen so vor, daß man in die Mischung, die im wesentlichen eine wäßrige Natriumchloridlösung, ein wasserunlösliches Amin, ein polares organisches Lösemittel und gegebenenfalls ein unpolares Lösemittel enthält, eine gewisse Zeit lang Kohlendioxid einleitet.

Art und Menge der Bestandteile der organischen Phase(n) werden dabei in einem oder mehreren orientierenden Vorversuchen festgelegt. Während und gegebenenfalls auch noch eine Zeit lang nach der Einleitung von Kohlendioxid, ist dafür Sorge zu tragen, daß eine gute gegenseitige Durchmischung der einzelnen Phasen, z.B. mit Hilfe eines Rührwerks oder eines intensiven Gasstroms, stattfindet. Zur Verbesserung der Ausbeute ist es zweckmäßig, in der Carbonisierungsstufe bei Temperaturen unter 25 °C zu arbeiten, wobei die untere Temperaturgrenze durch den Taupunkt des Kohlendioxids, durch das Auskristallisieren von Lösemittel, Amin oder Aminhydrochlorid gegeben ist.

Im Allgemeinen wird das erfindungsgemäße Verfahren in der Carbonisierungsstufe drucklos betrieben ; es ist jedoch auch möglich, unter Druck, vorzugsweise unter $CO_2$-Druck zu arbeiten. Dabei sollte der Druck so gewählt werden, daß der Taupunkt des Kohlendioxids nicht erreicht wird.

Beim Einsatz eines unpolaren Lösemittels kann es je nach Art des polaren organischen Lösemittels und nach der Höhe des Umsatzes vorkommen, daß sich auch zwei organische Phasen ausbilden, die dann gemeinsam von den übrigen Phasen (wäßrige Phase, festes Natriumhydrogencarbonat und Gasphase) abgetrennt werden.

Im allgemeinen erfolgt die Phasentrennung so, daß man die Reaktionsmischung in eine geeignete Vorrichtung einführt, das gegebenenfalls Inertgase (Stickstoff, Argon) enthaltende Kohlendioxid am Kopf und die Aufschlämmung von Natriumhydrogencarbonat in der sogenannten Armsole im unteren Teil der Trennvorrichtung abzieht. Zurück bleibt die organische Phase, die im wesentlichen aus Aminhydrochlorid, Amin, polarem organischen Lösemittel und gegebenenfalls unpolarem Lösemittel besteht.

Während das abgezogene Kohlendioxid direkt in die Carbonisierungsstufe zurückgeführt wird, geschieht dies mit der nach bekannten Trennverfahren (Filtrieren, Zentrifugieren) vom festen Natriumhydrogencarbonat befreiten wäßrigen Phase erst nach einer Aufkonzentrierung mit Natriumchlorid. Das zunächst noch feuchte Natriumhydrogencarbonat wird gegebenenfalls nach gewissen Reinigungsoperationen entweder durch eine schonende Trocknung von anhaftendem Wasser befreit oder calciniert, wobei das Wasser zusammen mit der abgespaltenen Kohlensäure entfernt und im allgemeinen der Carbonisierungsstufe zugeführt wird.

Sodann wird die organische Phase von dem polaren organischen Lösemittel und gegebenenfalls auch von dem vorhandenen Wasser durch z.B. Extraktion und/oder Destillation soweit wir möglich und/oder erforderlich befreit. Die Entfernung des Wassers ist nur dann erforderlich, wenn bei der folgenden Aminhydrochloridspaltung ausschließlich gasförmiger Chlorwasserstoff erhalten werden soll.

Bevor das Aminhydrochlorid zwecks Abspaltung von Chlorwasserstoff erhitzt wird, ist dafür Sorge zu tragen, daß ihm die erforderliche Menge eines geeigneten unpolaren Lösemittels zugesetzt wird, sofern diese nicht schon in der Carbonisierungsstufe oder einer späteren Verfahrensstufe zugegeben wurde. Im allgemeinen werden 5 bis 0,1 Gewichtsteile, vorzugsweise 3 bis 0,2 Gewichtsteile, unpolares Lösemittel pro Gewichtsteil Amin (Summe aus freiem und als Hydrochlorid gebundenem Amin) eingesetzt. Bei der Durchführung der thermischen Zerlegung des Aminhydrochlorids kann man z.B. so vorgehen, wie es in der DE-C-26 33 640 oder in der DE-A-28 05 933 beschrieben ist. Gemäß dem Verfahren der DE-C-26 33 640 wird dabei die gegebenenfalls noch freies Amin enthaltende Lösung des Aminhydrochlorids in einem mit einer Kolonne versehenen Behälter zum Sieden gebracht, wobei es erforderlich ist, daß das Lösemittel 20 oder mehr °C niedriger als das Amin siedet. Am Kopf der Kolonne werden die vornehmlich aus dem Lösemittel bestehenden Brüden auf übliche Weise kondensiert und der Kolonne als Rückfluß wieder zugeführt, wobei der in den Brüden enthaltene und vom kondensierten Lösemittel nicht gelöste Chlorwasserstoff zugleich aus der Kondensationszone entweicht. Zur Beschleunigung der Chlorwasserstoff-Bildung kann der abgespaltene Chlorwasserstoff hinter dem Kondensator auf minderen Druck entspannt oder mit Hilfe eines Inertgasstroms ausgetragen werden. Als Inertgase kommen Stickstoff, ferner unter den vorherrschenden Bedingungen gasförmige Stoffe, wie z.B. Ethylen, infrage, die in einer nachfolgenden Stufe mit Chlorwasserstoff umgesetzt werden sollen.

Nach dem Verfahren der DE-A-28 05 933 wird der Chlorwasserstoff aus dem Aminhydrochlorid dadurch gewonnen, daß man dieses in dem unpolaren Lösemittel auf 100 bis 250 °C unter Durchleiten eines inerten Gasstroms auf 100 bis 250 °C erhitzt. Die innerhalb dieses Temperaturbereiches günstige Temperatur ist von der Art und Menge sowohl des Amins wie des unpolaren Lösemittels abhängig. Es ist vorteilhaft, wenn das unpolare Lösemittel bei der Spalttemperatur einen relativ niedrigen Dampfdruck hat, d.h. sein Siedepunkt soll mindestens 20 °C über der Spalttemperatur liegen, um den Austrag als Dampf im Inertgasstrom möglichst niedrig zu halten.

Aus dem Chlorwasserstoff-Inertgas-Gemisch kann der Chlorwasserstoff leicht auf bekannte Art, z.B. Adsorption, rein hergestellt werden, jedoch ist dies je nach Verwendungszweck des Chlorwasserstoffs nicht in allen Fällen erforderlich. Verwendet man z.B. als Trägergas Ethylen, dann kann das erhaltene Gasgemisch direkt zur Synthese von Chlorethanen eingesetzt werden.

Eine bevorzugte Ausführungsform des erfindungsgemäßen Verfahrens besteht darin, daß man bereits kleine Mengen von Verunreinigungen, wie z.B. primäre und sekundäre Amine, die vor allem durch die thermische Beanspruchung der Mischung aus tertiärem Amin und unpolarem Lösemittel entstehen, aus dem Sumpf der Thermolysestufe entfernt, bevor man ihn wieder an geeigneter Stelle in das Verfahren einbringt.

Die Abtrennung der unerwünschten Verunreinigungen kann z.B. so erfolgen, wie es in den deutschen Patentanmeldungen DE-A-28 34 252 und DE-A-29 21 916 beschrieben wird. Im Falle des Verfahrens der DE-A-28 34 252 wird dabei das Gemisch aus Amin, Lösemittel und gegebenenfalls Verunreinigungen ganz oder teilweise über ein Adsorptionsmittel, wie z.B. Aluminiumoxid, Kieselgel oder silanisiertes Kieselgel, geleitet. Bei dem Verfahren der DE-A-29 21 916 inaktiviert man dagegen die gebildeten primären und sekundären Amine durch Reaktion mit Carbonsäurechloriden.

Eine weitere bevorzugte Ausführungsform des erfindungsgemäßen Verfahrens ist dadurch gekennzeichnet, daß man die organische(n) Phase(n) nach der Phasentrennung durch Extraktion mit Wasser oder einer wäßrigen Salzlösung weitgehend von dem polaren organischen Lösemittel befreit (Hinextraktion), aus dem Extrakt mit Hilfe des Sumpfproduktes aus der Thermolysestufe das polare organische Lösemittel rückextrahiert (Rückextraktion), die Mischung aus Amin, unpolarem und polarem organischen Lösemittel wieder der Carbonisierungsstufe zuführt und das Raffinat der Rückextraktion erneut bei der Hinextraktion einsetzt.

Die Extraktion des polaren organischen Lösemittels aus der (den) organischen Phase(n) erfolgt mit Wasser als Extraktionsmittel. Diese sogenannte Hinextraktion sollte bei möglichst tiefer Temperatur erfolgen, um eine hohe Extraktionsrate zu erreichen. Im allgemeinen führt man die Hinextraktion bei Temperaturen von 0 bis + 50 °C, vorzugsweise + 5 bis + 30 °C, durch. Die Temperaturgrenzen sind jedoch letztlich durch den Erstarrungspunkt der zu extrahierenden Mischung und des Extraktionsmittels sowie durch wirtschaftliche Gesichtspunkte gesetzt.

Die Rückgewinnung des polaren organischen Lösemittels aus dem Extrakt I der Hinextraktion geschieht durch Extraktion mit der HCl-freien Mischung von Amin und unpolarem Lösemittel, die nach der Hydrochloridspaltung die Thermolysestufe verläßt. Die Temperatur sollte bei dieser sogenannten Rückextraktion zur Erzielung eines optimalen Wirkungsgrades möglichst hoch eingestellt sein, wobei Grenzen durch den Druck des Systems, durch die Energiekosten sowie durch die Stabilität der Produkte gesetzt sind. Im allgemeinen führt man die Rückextraktion bei Temperaturen von + 30 bis + 250 °C, vorzugsweise + 50 bis + 150 °C, durch. Der beide organische Lösemittel sowie das Amin enthaltende Extrakt II wird wieder der Carbonisierung zugeführt. Das bei der Rückextraktion vom polaren organischen Lösemittel weitgehend befreite Raffinat (Wasser oder wäßrige Salzlösung) wird erneut für die Hinextraktion eingesetzt.

Es hat sich als zweckmäßig erwiesen, bei der Hinextraktion nicht reines Wasser, sondern wäßrige Lösungen anorganischer Salze wie Natriumchlorid oder Calciumchlorid als Extraktionsmittel einzusetzen. Die Konzentration dieser Solen kann hierbei zwischen 0 und 30 %, vorzugsweise zwischen 5 und 20 %, liegen. Der Salzgehalt verschiebt die Gleichgewichtsverteilung des zu extrahierenden polaren organischen Lösemittels für die Rückextraktion in eine günstige und für die Hinextraktion in eine ungünstige Richtung. Es gibt eine optimale Salzkonzentration, bei der die Verbesserung der Rückextraktion sich stärker auswirkt als die entsprechende Verschlechterung der Hinextraktion. Dieses Optimum kann leicht durch einige orientierende Versuche herausgefunden werden. Weiterhin erweist sich ein gewisser Salzgehalt im Extraktionsmittel als nützlich zur Verbesserung des Phasentrennverhaltens. Empfehlenswert ist die Verwendung eines Salzes, das bereits in Form einer konzentrierten Sole bei der Carbonisierungsreaktion zum Einsatz kommt ; d.h. im Falle der Herstellung von Natriumhydrogencarbonat bietet sich Natriumchlorid an. Auf diese Weise vermeidet man die Verunreinigung der Sole durch Fremdsalze.

Der beschriebene extraktive Lösemittelaustausch kann z.B. in Form von Gegenstromextraktionen mit mehreren theoretischen Stufen betrieben werden, wobei 6 bis 10 Stufen technisch sinnvoll sind.

Das erfindungsgemäße Verfahren kann sowohl diskontinuierlich als auch kontinuierlich durchgeführt werden.

Das bei dem erfindungsgemäßen Verfahren gewonnene Natriumhydrogencarbonat wird in erster Linie zur Herstellung von Soda, der daneben anfallende Chlorwasserstoff zur Herstellung von Salzsäure oder Chlorkohlenwasserstoffen, wie z.B. Vinylchlorid, verwendet.

Das erfindungsgemäße Verfahren kann auch für die Herstellung von Kaliumhydrogencarbonat und Chlorwasserstoff aus Kaliumchlorid und Kohlensäure eingesetzt werden. Für diese Maßnahme wird jedoch im Rahmen der vorliegenden Erfindung kein Schutz begehrt.

Alle Prozentangaben — auch in den nachfolgenden Beispielen, die das erfindungsgemäße Verfahren erläutern — sind, sofern nicht anders angegeben, Gewichtsprozente.

## Beispiel 1

In einem zylindrischen thermostatisierbaren Reaktionsgefäß wurden unter heftigem Rühren (Ultra-Turrax der Firma Janke & Kunkel KG) bei 20 °C 125 g (0,35 Mol) Trioctylamin, 125 g Ethanol und 204 g gesättigte wäßrige Natriumchloridlösung (0,92 Mol NaCl) eine Stunde lang mit einem großen Überschuß an Kohlendioxid begast. Das gebildete Natriumhydrogencarbonat, das durch Filtration der Reaktionsmischung isoliert wurde, fiel in einer Menge von 28,4 g an, entsprechend einer auf Amin bezogenen Ausbeute von 96 %.

Die aus dem Filtrat abgetrennte organische Phase (199 g) enthielt Amin, Aminhydrochlorid, Wasser und etwa die Hälfte des eingesetzten Ethanols. Die andere Hälfte des polaren organischen Lösemittels befand sich in der als wäßrige Phase abgetrennten Armsole.

Die organische Phase wurde nach Zugabe von 200 g Dodecan destillativ vom Wasser und Ethanol befreit und anschließend zur Thermolyse des Hydrochlorids auf eine Kolonne gegeben, in der bei Temperaturen von 214 bis 230 °C die Spaltung erfolgte. Über Kopf der Spaltkolonne wurden 12,3 g Chlorwasserstoff abgezogen, während als Sumpfprodukt das Trioctylamin im Gemisch mit Dodecan zurückgewonnen wurde.

## Beispiel 2

In ein zylindrisches thermostatisierbares Reaktionsgefäß (Inhalt : 2 l) wurden unter heftigem Rühren bei 10 °C pro Stunde 162,5 g (0,46 Mol) Trioctylamin, 81,3 g Isopropanol, 81,3 g Dodecan, 245 g gesättigte wäßrige Natriumchloridlösung (1,1 Mol NaCl) und 56 l (2,5 Mol) Kohlendioxid eingefahren. Die Mischung durchlief zur Vervollständigung der Reaktion unter Rühren noch zwei weitere kaskadenartig hintereinandergeschaltete Gefäße, bevor sie in einem 5 l-Trenngefäß in vier Phasen zerfiel. Am Kopf wurde Kohlendioxid abgezogen und rezirkuliert. Im unteren konisch sich verengenden Teil des Trenngefäßes wurde eine Aufschlämmung von Natriumhydrogencarbonat in Armsole mit Hilfe eines Schneckenförderers abgezogen. Die Abtrennung des Salzes durch Filtration lieferte stündlich 30,1 g Natriumhydrogencarbonat. Die Armsole wurde nach Aufkonzentrieren in einem NaCl-Sättiger wieder in die Rührkesselkaskade zurückgeführt.

Über der wäßrigen feststoffhaltigen Phase schied sich im Trenngefäß eine organische Schicht ab, die zu 11,6 % aus Trioctylamin, zu 45,3 % aus Trioctylaminhydrochlorid, zu 14,1 % aus Isopropanol, zu 26,3 % aus Dodecan und zu 2,7 % aus Wasser bestand. Die organische Phase wurde durch Vakuumdestillation weitestgehend von Isopropanol und Wasser befreit. Die Thermolyse des Hydrochlorids erfolgte anschließend in einer Spaltkolonne bei Temperaturen zwischen 214 und 260 °C. Über Kopf wurden stündlich 13 g gasförmiger Chlorwasserstoff abgezogen, während als Sumpfprodukt eine Mischung aus Trioctylamin und Dodecan anfiel. Diese Mischung durchlief anschließend eine mit Aluminiumoxid gefüllte Reinigungssäule, in der primäre und sekundäre Amine und deren Hydrochloride sowie sonstige Abbauprodukte

adsorptiv gebunden wurden. Das solchermaßen gereinigte Amin wurde im Gemisch mit Dodecan zurück in die Carbonisierungsstufe gefahren.

Im Verlaufe von 1 005 Stunden wurden 13 065 g (358,2 Mol) Chlorwasserstoff und 30 250,5 g (360,0 Mol) Natriumhydrogencarbonat, entsprechend einer Ausbeute von 78 %, bezogen auf durchgesetztes Amin, erzeugt.

## Beispiel 3

In Analogie zu Beispiel 2 wurden pro Stunde 153,8 g (0,43 Mol) Trioctylamin, 153,8 g Isopropanol, 153,8 g Dodecan, 244 g gesättigte wäßrige Natriumchloridlösung (1,1 Mol NaCl) und 52,9 l (2,4 Mol) Kohlendioxid bei 12 °C in der Rührkesselkaskade der Carbonisierungsstufe umgesetzt. Nach Phasentrennung wurden ca. 27 g/h Natriumhydrogencarbonat erhalten.

Die abgetrennte organische Phase enthielt 8,3 % Trioctylamin, 26,2 % Trioctylaminhydrochlorid, 29,6 % Isopropanol, 32,0 % Dodecan und 3,9 % Wasser. Stündlich wurden 479,8 g organische Phase mit 488 g einer 10 %igen wäßrigen Natriumchloridlösung in einer mit 4 mm Berlsätteln gefüllten Säule (DN 50 × 3 000) im Gegenstrom bei 12 °C extrahiert (Hinextraktion). Das Isopropanol wurde aus der organischen Phase zu 65 % extrahiert ; die restliche Menge sowie das Wasser wurden in einer Entwässerungskolonne destillativ entfernt.

Die Thermolyse des Hydrochlorids erfolgte anschließend in einer Spaltkolonne bei Temperaturen zwischen 214 und 240 °C. Über Kopf wurden stündlich 11,8 g Chlorwasserstoff abgezogen, während als Sumpfprodukt 307 g einer Mischung aus 50 % Trioctylamin und 50 % Dodecan anfiel. Diese Mischung durchlief anschließend eine mit Aluminiumoxid gefüllte Adsorptionssäule zwecks Entfernung von Abbauprodukten.

Zur Rückgewinnung des Isopropanols wurden stündlich 580 g des Extraktes aus der Hinextraktion mit 307 g Trioctylamin-Dodecan-Mischung aus der Reinigungsstufe in einer mit 4 mm Berlsätteln gefüllten Säule (DN 50 × 3 000) im Gegenstrom bei 120 °C extrahiert (Rückextraktion). Die Extraktionsrate betrug hierbei 66 %. Der Extrakt bestehend aus Amin, Dodecan und Isopropanol wurde in die Carbonisierungsstufe zurückgeführt. Von dem in der organischen Phase der Carbonisierungsstufe enthaltenen Isopropanol konnten insgesamt 43 % in beschriebener Weise extraktiv entfernt werden.

Das Destillat der Entwässerungskolonne, welches neben dem Wasser auch den bei der Hinextraktion nicht abgetrennten Isopropanolanteil enthielt, wurde in die Carbonisierungsstufe zurückgefahren.

Im Verlaufe von 835 Stunden wurden 9 745 g (267,2 Mol) Chlorwasserstoff und 22 604,5 g (269,0 Mol) Natriumhydrogencarbonat, entsprechend einer Ausbeute von 74 %, bezogen auf durchgesetztes Amin, erzeugt.

## Beispiele 4 bis 8

In ein zylindrisches thermostatisierbares Reaktionsgefäß (Inhalt : 2 l) wurden unter heftigem Rühren bei 12 °C pro Stunde 0,6 Mol tert. Amin gemäß Tabelle 1, 154 g Isopropanol, 154 g Dodecan, 244 g gesättigte wäßrige Natriumchloridlösung (1,1 Mol NaCl) und 56 l (2,5 Mol) Kohlendioxid eingefahren. Die Mischung durchlief zur Vervollständigung der Reaktion unter Rühren noch zwei weitere kaskadenartig hintereinandergeschaltete Gefäße, bevor sie in einem 5 l-Trenngefäß in vier Phasen zerfiel. Am Kopf wurde Kohlendioxid abgezogen und rezirkuliert. Im unteren konisch sich verengenden Teil des Trenngefäßes wurde eine Aufschlämmung von Natriumhydrogencarbonat in Armsole mit Hilfe eines Schneckenförderers abgezogen und der Feststoff durch Filtration abgetrennt. Die als Filtrat anfallende Armsole wurde nach Aufkonzentrieren in einem NaCl-Sättiger wieder in die Rührkesselkaskade zurückgeführt.

Über der wäßrigen feststoffhaltigen Phase schied sich im Trenngefäß eine organische Schicht ab, die neben unumgesetztem Amin Aminhydrochlorid, Isopropanol, Dodecan und Wasser enthielt. Die organische Phase wurde mit etwa der gleichen Gewichtsmenge einer 10 %igen wäßrigen Natriumchloridlösung in einer mit 4 mm Berlsätteln gefüllten Säule (DN 50 × 3 000) im Gegenstrom bei 12 °C extrahiert (Hinextraktion). Das Isopropanol wurde aus der organischen Phase zu 60 bis 70 % extrahiert ; die restliche Menge sowie das Wasser wurden in einer Entwässerungskolonne destillativ entfernt.

Die Thermolyse des Hydrochlorids erfolgte anschließend in einer Spaltkolonne bei Temperaturen zwischen 214 und 240 °C. Über Kopf wurde der Chlorwasserstoff abgezogen, während als Sumpfprodukt eine Mischung aus 50 % Amin und 50 % Dodecan anfiel. Diese Mischung durchlief anschließend eine mit Aluminiumoxid gefüllte Adsorptionssäule zwecks Entfernung von Abbauprodukten.

Zur Rückgewinnung des Isopropanols wurde der Extrakt aus der Hinextraktion mit der Amin-Dodecan-Mischung aus der Reinigungsstufe in einer mit 4 mm Berlsätteln gefüllten Säule (DN 50 × 3 000) im Gegenstrom bei 120 °C extrahiert (Rückextraktion). Die Extraktionsrate lag hierbei zwischen 60 und 70 %. Der Extrakt bestehend aus Amin, Dodecan und Isopropanol wurde in die Carbonisierungsstufe zurückgeführt.

Das Destillat der Entwässerungskolonne, welches neben dem Wasser auch den bei der Hinextraktion nicht abgetrennten Isopropanolanteil enthielt, wurde in die Carbonisierungsstufe zurückgefahren.

Die Ergebnisse der einzelnen Fahrperioden sind in Tabelle 1 aufgelistet.

TABELLE 1

| Amin | Laufzeit (h) | Ausbeute an HCl (Mol) | Ausbeute an $NaHCO_3$ (Mol) | $NaHCO_3$-Ausbeute bez. auf Amin (%) |
|---|---|---|---|---|
| N-Dodecylpiperidin | 1 003 | 320,8 | 321,3 | 53,4 |
| N-Octyl-azacycloheptan | 935 | 405,1 | 407,9 | 72,7 |
| N-Dodecyl-azacycloheptan | 610 | 243,1 | 244,1 | 66,7 |
| N-Octyl-3,3,5(3,5,5)-trimethylazacycloheptan | 890 | 371,9 | 373,4 | 69,9 |
| N-Dodecyl-3,3,5(3,5,5)-trimethylazacycloheptan | 739 | 221,7 | 222,9 | 50,3 |

**Ansprüche**

1. Verfahren zur Herstellung von Natriumhydrogencarbonat und Chlorwasserstoff durch Umsetzung von Kohlendioxid mit einem Gemisch aus einer wäßrigen Natriumchloridlösung, einem tertiären Amin und einem polaren organischen Lösemittel unter guter gegenseitiger Durchmischung, Trennung der anfallenden Phasen und Rückführung der vom ausgefällten Natriumhydrogencarbonat befreiten wäßrigen Phase nach Aufkonzentrierung mit Natriumchlorid in die Carbonisierungsstufe, dadurch gekennzeichnet, daß man als tertiäres Amin ein nicht aromatisches, das in der Summe der stickstoffgebundenen Liganden 14 bis 39 Kohlenstoffatome enthält und höchstens eine Methylgruppe aufweist, einsetzt, nach der Phasentrennung das polare organische Lösemittel und vorhandenes Wasser soweit wie möglich und/oder erforderlich aus der organischen Phase entfernt, spätestens dem Rückstand ein unpolares Lösemittel zusetzt, die Mischung erhitzt (Thermolyse), und den Chlorwasserstoff abzieht.

2. Verfahren nach Anspruch 1, dadurch abgeändert, daß man in der Carbonisierungsstufe zusammen mit dem polaren organischen Lösemittel ein unpolares Lösemittel verwendet, nach der Phasentrennung die organische(n) Phase(n) vom polaren organischen Lösemittel und gegebenenfalls vom Wasser soweit wie möglich und/oder erforderlich befreit, den das unpolare Lösemittel enthaltenden Rückstand erhitzt (Thermolyse), den Chlorwasserstoff abzieht und die dabei verbleibende Lösung des Amins im unpolaren Lösemittel der Carbonisierungsstufe zuführt.

3. Verfahren nach den Ansprüchen 1 und 2, dadurch gekennzeichnet, daß man aus dem bei der Thermolyse anfallenden Sumpf die entstandenen Abbauprodukte vor einer Rückführung in das Verfahren entfernt bzw. darin inaktiviert.

4. Verfahren nach den Ansprüchen 1 bis 3, dadurch gekennzeichnet, daß man die organische(n) Phase(n) durch Extraktion mit Wasser oder einer wäßrigen Salzlösung soweit wie möglich und/oder erforderlich von dem polaren organischen Lösemittel befreit (Hinextraktion), aus dem Extrakt mit Hilfe des Sumpfprodukts aus der Thermolyse das polare organische Lösemittel rückextrahiert (Rückextraktion), die Mischung aus Amin, unpolarem und polarem organischen Lösemittel wieder der Carbonisierung zuführt und das Raffinat der Rückextraktion erneut bei der Hinextraktion einsetzt.

5. Verfahren nach Anspruch 4, dadurch gekennzeichnet, daß man die Hinextraktion bei einer Temperatur von 0 bis + 50 °C durchführt.

6. Verfahren nach den Ansprüchen 4 und 5, dadurch gekennzeichnet, daß man die Rückextraktion bei einer Temperatur von + 30 bis + 250 °C durchführt.

**Claims**

1. A process for the production of sodium bicarbonate and hydrogen chloride by reaction of carbon dioxide with a mixture of an aqueous sodium chloride solution, a tertiary amine and a polar organic solvent with good reciprocal mixing, separation of the resulting phases and recycling of the aqueous phase, which has been freed from precipitated sodium bicarbonate, to the carbonation stage after it has been restocked with sodium chloride, characterised in that a non-aromatic tertiary amine is used which contains a total of 14 to 39 carbon atoms in the groups bound to the nitrogen atom, at most one being methyl, after the phase separation the polar organic solvent is removed and any water present is removed from the organic phase in so far as this is possible and/or necessary, a nonpolar solvent is added at the latest to the residue, the mixture is heated (thermolysis) and the hydrogen chloride is withdrawn.

2. A process according to claim 1, modified in that a non-polar solvent is used in the carbonation stage together with the polar organic solvent, after the phase separation the organic phase(s) is(are) freed from the polar organic solvent and optionally from the water in so far as this is possible and/or necessary, the residue containing the nonpolar solvent is heated (thermolysis), the hydrogen chloride is withdrawn

and the remaining solution of the amine in the nonpolar solvent is passed to the carbonation stage.

3. A process according to claim 1 or 2, characterised in that the decomposition products occurring in the bottoms arising in the thermolysis are removed or inactivated there-in before recycling to the process steps takes place.

4. A process according to any of claims 1 to 3, characterised in that the organic phase(s) is(are) freed from the polar organic solvent in so far as this is possible and/or necessary by extraction with water or an aqueous salt solution (forward extraction), the polar organic solvent is extracted back from the resulting extract by means of the bottoms product from the thermolysis (black extraction), the mixture of amine, nonpolar solvent and polar organic solvent is passed again to the carbonation stage and the raffinate of the back extraction is used again in the forward extraction.

5. A process according to claim 4, characterised in that the forward extraction is carried out at a temperature of 0 to + 50 °C.

6. A process according to claim 4 or 5, characterised in that the back extraction is carried out at a temperature of + 30 to + 250 °C.

**Revendications**

1. Procédé de préparation d'hydrogénocarbonate de sodium et de chlorure d'hydrogène par réaction de dioxyde de carbone sur un mélange constitué par une solution aqueuse de chlorure de sodium, par une amine tertiaire et par un solvant organique polaire, avec bon mélange réciproque, séparation des phases qui se forment et renvoi dans l'étape de carbonisation, après concentration avec du chlorure de sodium, de la phase aqueuse libre débarrassée de l'hydrogénocarbonate de sodium qui a précipité, ledit procédé étant caractérisé par le fait qu'on utilise, comme amine tertiaire, une amine non aromatique qui, dans la somme des motifs liés à l'azote, renferme de 14 à 39 atomes de carbone et présente au plus un groupe méthyle, qu'après séparation des phases, on élimine le solvant organique et autant que possible et/ou si nécessaire de la phase organique l'eau présente, qu'on ajoute plus tard au résidu un solvant apolaire, qu'on chauffe le mélange (thermolyse) et qu'on soutire le chlorure d'hydrogène.

2. Procédé selon la revendication 1, modifié par le fait que dans l'étape de carbonisation on utilise, conjointement avec le solvant organique polaire, un solvant apolaire, qu'après la séparation des phases, on débarrasse autant que possible et/ou si nécessaire la ou les phase(s) organique(s) du solvant organique polaire et, le cas échéant, de l'eau, qu'on chauffe (thermolyse) le résidu renfermant le solvant apolaire, qu'on soutire le chlorure d'hydrogène et qu'on envoie à l'étape de carbonisation la solution restante de l'amine dans le solvant apolaire.

3. Procédé selon les revendications 1 et 2, caractérisé par le fait qu'à partir du produit de pied se formant lors de la thermolyse, on élimine avant renvoi dans le procédé les produits de dégradation qui se sont formés, ou les inactive.

4. Procédé selon les revendications 1 à 3, caractérisé par le fait qu'on débarrasse autant que possible et/ou si nécessaire la ou les phase(s) organique(s) du solvant organique polaire (extraction d'aller) en les extrayant avec de l'eau ou une solution saline aqueuse, qu'on récupère le solvant organique polaire à partir de l'extrait par extraction (extraction en retour) à l'aide du produit de queue provenant de la thermolyse, qu'on délivre à nouveau à la carbonisation le mélange constitué par l'amine, le solvant organique apolaire et le solvant organique polaire et qu'on utilise à nouveau, lors de l'extraction d'aller, le produit raffiné provenant de l'extraction en retour.

5. Procédé selon la revendication 4, caractérisé par le fait qu'on effectue l'extraction d'aller à une température de zéro à + 50 °C.

6. Procédé selon les revendications 4 et 5, caractérisé par le fait qu'on effectue l'extraction en retour à une température de + 30 à + 250 °C.